# EUROPÄISCHE PATENTSCHRIFT

(11) **EP 1 525 957 B1**
(45) Veröffentlichungstag und Bekanntmachung des Hinweises auf die Patenterteilung: **25.01.2017**
(21) Anmeldenummer: 04025180.3
(22) Anmeldetag: 22.10.2004
(51) Int. Cl.: B25J 19/00, B25J 9/04

(54) **Roboter vom Scara-Typ**
Scara-type robot
Robot de type Scara

(30) Priorität: 23.10.2003 DE 10349452
(43) Veröffentlichungstag der Anmeldung: 27.04.2005
(73) Patentinhaber: STÄUBLI FAVERGES, 74210 Faverges (FR)
(72) Erfinder: Friedrich, Boris, 70376 Stuttgart (DE); Henrichs, Volker, 71638 Ludwigsburg (DE); Jenke, Andreas, 74321 Bietigheim-Bissingen (DE); Reumann, Delf, 70176 Stuttgart (DE)
(74) Vertreter: Lavoix

(56) Entgegenhaltungen:
- EP-A- 1 170 097
- DE-U- 29 711 523
- US-A- 5 000 653
- US-B1- 6 408 710
- PATENT ABSTRACTS OF JAPAN Bd. 1999, Nr. 10, 31. August 1999 (1999-08-31) -& JP 11 138488 A (MATSUSHITA ELECTRIC IND CO LTD), 25. Mai 1999 (1999-05-25)
- PATENT ABSTRACTS OF JAPAN Bd. 1997, Nr. 07, 31. Juli 1997 (1997-07-31) -& JP 09 066479 A (YAMAHA MOTOR CO LTD), 11. März 1997 (1997-03-11)

## Beschreibung

Die vorliegende Erfindung betrifft einen Scara-Roboter, welcher als Roboterkörperteile eine Roboterkonsole, einen um eine erste Schwenkachse schwenkbar an der Roboterkonsole angelenkten ersten Roboterarm und einen an dem ersten Roboterarm um eine zur ersten Schwenkachse im Wesentlichen parallele zweite Schwenkachse schwenkbar angelenkten zweiten Roboterarm mit wenigstens einer Arbeitseinheit umfasst, wobei der Roboter weiter wenigstens einen ersten Schwenkmotor zum Verschwenken einer Arm-Einheit aus erstem und zweitem Roboterarm bezüglich der Roboterkonsole, wenigstens einen zweiten Schwenkmotor zum Verschwenken des zweiten Roboterarms bezüglich des ersten Roboterarms und wenigstens einen Arbeitsmotor zur Betätigung der Arbeitseinheit aufweist, welche Motoren über eine Leistungselektronik steuerbar sind, die als elektrische Schaltungen Umrichterschaltungen zur Stromversorgung der Motoren sowie wenigstens eine Steuerschaltung zum Betrieb der Umrichterschaltungen und damit zur Steuerung der Motoren umfasst, wobei wenigstens eine Schaltung aus Umrichterschaltung und Steuerschaltung in wenigstens einem der Roboterarme an einem ihr zugeordneten Wandabschnitt eines Gehäuses des Roboterarms angeordnet ist.

Ein derartiger Roboter, allerdings nicht vom Scara-Typ, ist aus der EP 1 170 097 B1 bekannt. Derartige Roboter werden beispielsweise an Montagestrecken zur Verrichtung von Montagearbeiten eingesetzt.

Ein Scara-Roboter mit jedoch nicht im Roboterarm angeordneten Schaltungen ist aus der US 5 000 653 A bekannt.

Für diese Roboter, wie für Fertigungs- und Montageeinrichtungen überhaupt, besteht die Forderung, nach größtmöglicher Effektivität bei größtmöglicher Kompaktheit. Dies gilt nicht nur für den mechanischen Teil des Roboters, d.h. für die konstruktive Gestaltung der Roboterkörperteile, sondern auch für die zum Betrieb des Roboters nötige Elektronik. Zur Verringerung des erforderlichen Bauraums wurde gemäß der EP 1 170 097 B1 vorgeschlagen, die Antriebselektronik in den Roboterarmen unterzubringen, und zwar unter dem Gesichtspunkt eines möglichst geringen thermischen Einflusses der Antriebselektronik auf die Roboterstruktur, um die Bewegungsgenauigkeit nicht zu beeinflussen.

Ergänzend sei im Zusammenhang verteilter Antriebe eines Gesamtsystems die EP 1 043 643 A2 erwähnt, welche ein Kabelsystem zur Verkabelung einer Zelle offenbart, wobei die Zelle ein Zentralmodul sowie Antriebe aufweist. Das Zentralmodul der dort offenbarten Zelle ist über Starkstromleitungen mit dem Netz verbindbar und kann von übergeordneten Einheiten Informationen erhalten und an diese übertragen. Die Antriebe umfassen Elektromotoren und zugeordnete Umrichter, wobei die Umrichter und die Elektromotoren jeweils eine bauliche Einheit bilden. Zwischen den Antrieben und dem Zentralmodul ist eine Sternverbindungsstruktur realisiert, d.h. jeder Antrieb verfügt über eine eigene Leitung zur Verbindung mit den Zentralmodul. Über diese Verbindungsleitung werden Antriebsstrom und Antriebsinformation übertragen.

Als Arbeitseinheit eines Scara-Roboters ist aus der JP 62049070 A eine Robotspindel bekannt, welche sowohl um ihre Längsachse drehbar, als auch unabhängig von einer Drehung um die Längsachse in Richtung ihrer Längsachse verlagerbar ist.

Die Gelenke der Roboterkörperteile untereinander können in an sich bekannter Weise mit einem so genannten "harmonic drive"-Getriebe realisiert sein, wie es aus der DE 35 22 336 bekannt ist. Diese Getriebe zeichnen sich durch ein hohes Getriebeübersetzungsverhältnis und Spielfreiheit aus.

Es ist Aufgabe der vorliegenden Erfindung, einen Scara-Roboter mit verbesserten dynamischen Eigenschaften bereitzustellen, dessen Roboterarme mit geringem Kraftaufwand schnell zwischen zwei Stellungen bewegbar sind.

Diese Aufgabe wird durch einen Scara-Roboter der eingangs genannten Art gelöst, bei welchem der Roboterarm bezogen auf die jeweilige Schwenkachse des Roboterarms einen schwenkachsennahen und einen schwenkachsenfernen Gehäuseabschnitt aufweist und die Gehäusewandabschnitte mit daran angeordneten Schaltungen in dem schwenkachsennahen Gehäuseabschnitt gelegen sind.

Mit der erfindungsgemäßen Anordnung der wenigstens einen an einem Gehäusewandabschnitt des Scara-Roboters angeordneten Schaltung in dem schwenkachsennahen Gehäuseabschnitt kann das Massenträgheitsmoment des betroffenen Roboterarms reduziert werden. Dadurch kann der Arm bei vorgegebener Antriebskraft schneller beschleunigt und damit schneller bewegt werden. Anders ausgedrückt, ist zu seiner Beschleunigung weniger Antriebskraft nötig als bei einem Roboterarm mit größerem Massenträgheitsmoment und gleicher Beschleunigung. Gleichzeitig kann durch die bekannte Anordnung der wenigstens einen Schaltung in wenigstens einem der Roboterarme an einem ihr zugeordneten Wandabschnitt eines Gehäuses des Roboterarms der Scara-Roboter kompakt, insbesondere mit kleinerem Schaltschrank, ausgeführt sein. Das Gehäuse des Scara-Roboters kann durch die Anordnung der wenigstens einen Schaltung an der Gehäusewand zur Kühlung der wenigstens einen Schaltung beitragen.

Bei der gegebenen Anordnung der wenigstens einen Schaltung an einem Gehäusewandabschnitt kann das geringstmögliche Massenträgheitsmoment dann erhalten werden, wenn der Gehäusewandabschnitt mit der daran angeordneten wenigstens einen Schaltung der Gehäusewandabschnitt mit den kürzesten Abstand zur Schwenkachse des Roboterarms ist.

In der Regel sind in wenigstens einem Roboterarm des erfindungsgemäßen Scara-Roboters mehrere elektrische Schaltungen aufgenommen. Um eine ausgewogene Massenverteilung bei gleichzeitig effektiver Kühlung dieser Schaltungen zu ermöglichen, ist es vorteilhaft, wenn von wenigstens einem Teil dieser Schaltungen, vorzugsweise von allen Schaltungen, jede Schaltung an einem anderen ihr jeweils zugeordneten Wandabschnitt des Gehäuses des Roboterarms angeordnet ist.

Weiterhin kann der Roboterarm eine Mehrzahl von elektrischen Schaltungen aufweisen, welche in ihm aufgenommen sind. Dann ist es aus Gründen eines möglichst niedrigen Massenträgheitsmoments bezüglich der Schwenkachse des Roboterarms vorteilhaft, wenn die Gehäusewandabschnitte, an welchem elektrische Schaltungen der Leistungselektronik angeordnet sind, in dem schwenkachsennahen Gehäuseabschnitt gelegen sind. Ein derartiger Roboterarm kann bei gleicher Motorleistung auf Grund seines geringeren Massenträgheitsmoments schneller drehbeschleunigt werden.

Bevorzugt sind zur Verringerung des Massenträgheitsmoments die Gehäusewandabschnitte, an welchen elektrische Schaltungen der Leistungselektronik angeordnet sind, diejenigen Gehäusewandabschnitte mit den kürzesten Abständen zur Schwenkachse des betreffenden Roboterarms. Besonders bevorzugt können diese Gehäusewandabschnitte zur Erleichterung der Anbringung der Schaltungen und gewünschtenfalls von Kühlkörpern eben ausgebildet sein.

Aufgrund der Umrichtung von Strömen, welche zum Antrieb eines Motors im Roboterarm benötigt werden, weisen vor allen Dingen die Umrichterschaltungen eine große Masse auf. Daher ist es im Hinblick auf ein möglichst geringes Massenträgheitsmoment vorteilhaft, wenn die wenigstens eine schwenkachsennah vorgesehene Schaltung eine Umrichterschaltung ist.

Es können gemäß einer Weiterbildung der Erfindung alle Umrichterschaltungen und Steuerschaltungen der Leistungselektronik in den Roboterkörperteilen: Roboterarme und Roboterkonsole, aufgenommen sein, was eine weitere Verkleinerung der zum Betrieb des Scara-Roboters notwendigen Schaltschränke ermöglicht und den Montageaufwand, etwa beim Austausch eines Roboterarms oder allgemein beim Zusammenbau des Scara-Roboters reduziert.

Eine verteilte Anordnung von elektrischen Schaltungen der Leistungselektronik an den Roboterkörperteilen kann unter Umständen zu einem erhöhten Verkabelungsaufwand führen, was wiederum eine potentielle Fehlerquelle bei der Robotermontage oder beim Roboterbetrieb darstellt. Um die zwischen Schaltungen der Leistungselektronik und den jeweiligen Motoren zu verlegende Verkabelung möglichst einfach zu halten, kann der Scara-Roboter derart weitergebildet sein, dass jedem Motor wenigstens eine Umrichterschaltung zugeordnet ist und die zugeordnete Schaltung in demselben Roboterkörperteil, insbesondere Roboterarm, wie der jeweilige Motor aufgenommen ist.

Dies soll nicht ausschließen, dass gemäß einer vorteilhaften Weiterbildung der Erfindung zur Verringerung des Verkabelungsaufwands auch Steuerschaltungen in demselben Roboterkörperteil, insbesondere Roboterarm, aufgenommen sind wie der von ihnen gesteuerte Motor oder gegebenenfalls eine von ihnen gesteuerte Mehrzahl von Motoren. Häufig ist nämlich einer Steuerschaltung eine Mehrzahl von Motoren zugeordnet. Jedoch kann der Scara-Roboter so ausgelegt werden, dass einer Steuerschaltung nicht Motoren in unterschiedlichen Roboterkörperteilen zugeordnet sind.

Die Aufnahme von elektrischen Schaltungen in einen Roboterarm wirft weiterhin das Problem einer entsprechenden Kühlung dieser Schaltungen auf. Eine effektive Kühlung kann dadurch erfolgen, dass alternativ oder zusätzlich wenigstens einem Teil der elektrischen Schaltungen Kühlkörper zugeordnet sind, welche einen Außenwandabschnitt, vorzugsweise auch einen Innenwandabschnitt, eines Gehäuses eines Roboterarms bilden. Diese Kühlkörper können etwa in an sich bekannter Weise mit Rippen versehen sein oder/und aus einem Material mit besonders hoher Wärmeleitfähigkeit, wie etwa Aluminium, gefertigt sein.

Durch die schnellen Bewegungen der Roboterarme im Roboterbetrieb sind die einen Außenwandabschnitt des Gehäuses eines Roboterarms bildenden Kühlkörper ständig von einem Luftzug umströmt, was die Kühlung verbessert. Zwar kann es ausreichen, die Kühlkörper zur Bildung von Außenwandabschnitten von außen auf das Gehäuse des Roboterarms aufzusetzen. Im Hinblick auf eine effektive Kühlung ist es jedoch bevorzugt, dass die Kühlkörper auf oder in eine Öffnung des Gehäuses des Roboterarms auf- bzw. eingesetzt sind, sodass sie auch einen Innenwandabschnitt bilden. In diesem Fall kann eine einem derartigen Kühlkörper zugeordnete elektrische Schaltung in direktem Wärmeübertragungskontakt mit dem Kühlkörper stehen, sodass die Wärme bestmöglich vom Innenraum des Roboterarms an die Außenumgebung abgeleitet werden kann. Zur Sicherstellung eines möglichst guten Wärmeübergangs von der elektrischen Schaltung auf den Kühlkörper kann die Schaltung mechanisch an dem Kühlkörper befestigt sein.

Die meiste Wärme wird bei derartiger Leistungselektronik von den Umrichterschaltungen erzeugt, weshalb es vorteilhaft ist, einen Kühlkörper wenigstens der mindestens einen Umrichterschaltung zuzuordnen. Selbstverständlich kann in einer Weiterbildung der bevorzugten Ausführungsform auch wenigstens einer Steuerschaltung ein Kühlkörper zugeordnet sein.

Nicht nur die Schaltungen, sondern auch die in den Roboterkörperteilen aufgenommen Motoren entwickeln Wärme, die an die Außenumgebung abgeführt werden muss. Wie oben bereits erwähnt wurde, kann das Gehäuse eines Roboterkörperteils zur Abführung von Wärme aus dem Roboterkörperteil-Innenraum beitragen. Daher ist es zur Abführung von Wärme aus dem Innenraum eines Roboterkörperteils, insbesondere eines Roboterarms, vorteilhaft, wenn ein Abschnitt eines Gehäuses eines Roboterkörperteils (Schwenkmotorgehäuseabschnitt) ein Gehäuse für wenigstens einen in dem jeweiligen Roboterkörperteil aufgenommenen Schwenkmotor bildet. In diesem Fall kann die Wärme direkt vom Schwenkmotor in das in der Regel metallische Gehäuse eingeleitet und von dort an die Außenumgebung abgegeben werden.

Konstruktiv kann die Ausbildung eines Gehäuseabschnitts des Roboterkörperteils, insbesondere eines Roboterarms, als Gehäuse für einen Schwenkmotor in einfacher Weise dadurch realisiert sein, dass ein Stator wenigstens eines Schwenkmotors unmittelbar an dem Schwenkmotorgehäuseabschnitt des Roboterkörperteils angebracht ist, vorzugsweise durch Aufschrumpfen des Schwenkmotorgehäuseabschnitts auf den Schwenkmotor-Stator. Eine derartige Montage des Schwenkmotors in dem Schwenkmotorgehäuseabschnitt des Roboterkörperteils erfordert zwar einen höheren Montageaufwand, da erst das Gehäuse erwärmt werden muss, bevor der kalte Motor bzw. sein Stator in das erwärmte Gehäuse eingesetzt wird, sodass der Stator nach dem Abkühlen in dem Gehäuse festsitzt. Dieser Nachteil wird jedoch durch die verbesserte Kühlung mehr als aufgewogen.

Ein derartiges Aufschrumpfen des Gehäuses eines Roboterkörperteils auf einen Schwenkmotor gilt bisher in der Fachwelt als nicht ausführbar, da ein Verkanten des Motors oder ein unkontrollierter Verzug des Gehäuses befürchtet wird. Überdies sind Bohrungen am Motor unter Berücksichtigung des Verzugs beim Aufschrumpfen des Gehäuses zur Befestigung des Motors an diesem äußerst genau zu fertigen. Dieses in der Fachwelt herrschende Vorurteil wurde von den Erfindern der dieser Anmeldung zu Grunde liegenden Erfindung überwunden.

Die erfindungsgemäße Aufgabe, nämlich einen Scara-Roboter mit kompakten Abmessungen und verbesserten dynamischen Eigenschaften bereitzustellen, wird gemäß einem weiteren Gesichtspunkt der Erfindung im Hinblick auf die im Roboter vorhandene Mechanik auch durch einen Scara-Roboter gelöst, bei welchem ein Roboterarm zwei Arbeitsmotoren für den Bewegungsantrieb der Arbeitseinheit umfasst, von welchen jeder Arbeitsmotor eine Motorwelle mit einem Antriebs-Längsende aufweist, von dem Antriebskraft abgreifbar ist, wobei die Arbeitsmotoren in dem Roboterarm mit im Wesentlichen parallelen Motorwellen jedoch entgegengesetzter Orientierung derart angeordnet sind, dass die Antriebs-Längsenden in entgegengesetzte Richtung weisen. Durch die beschriebene Orientierung der Arbeitsmotoren im Roboterarm kann das Vorsehen einer Umlenkvorrichtung vermieden werden, welche bisher zur Umlenkung einer Kraftübertragungseinrichtung, wie etwa eines Riemens oder Zahnriemens, zur Übertragung von Antriebskraft vom Antriebsmotor zu der Arbeitseinheit benötigt wurde. Durch Weglassen dieser Umlenkvorrichtung wird die Masse und damit das Massenträgheitsmoment des Roboterarms verringert. Der Vorteil dieser Motoranordnung soll im Folgenden genauer anhand einer bevorzugten Ausführungsform erläutert werden, bei welcher der Roboterarm der zuvor genannte zweite Roboterarm ist und dieser als Arbeitseinheit eine um eine Drehachse drehbare und unabhängig davon in Richtung der Drehachse verlagerbare Robotspindel umfasst:
Durch diese Anordnung der Arbeitsmotoren, welche zueinander im Wesentlichen um 180° verdreht in dem zweiten Roboterarm eingebaut sind, können die jeweiligen Antriebsabgriffstellen des Antriebs zur Drehung der Robotspindel um ihre Drehachse und des Antriebs zur Verlagerung der Robotspindel in Richtung der Drehachse in eben dieser Drehachsenrichtung mit Abstand voneinander angeordnet sein, ohne dass die Abmessung des Roboterarms in Richtung der Drehachse zunehmen muss. Dies liegt daran, dass beide Arbeitsmotoren auf diese Art und Weise einen gemeinsamen Erstreckungsabschnitt des zweiten Roboterarms in Richtung der Motorwelle der Arbeitsmotoren belegen. So können Riemen eines Riementriebs, vorzugsweise Zahnriemen, welche üblicherweise Antriebskraft von einem Antriebsende eines Arbeitsmotors zu einem jeweiligen Antrieb der Robotspindel übertragen, jeweils im Wesentlichen in einer Ebene verlaufen. Da die Riemenebenen mit Abstand voneinander angeordnet sind, behindern sich die beiden Riemen in ihrer Anordnung nicht. Bei nicht verdrehter, gleichsinniger Anordnung der Arbeitsmotoren müssten diese entweder mit größerem Abstand orthogonal zur Längsrichtung ihrer Motorwellen angeordnet werden, was das Massenträgheitsmoment des Roboterarms vergrößert, oder sie müssten in der Längsrichtung ihrer Motorwellen versetzt angeordnet werden, was die Bauhöhe des Roboterarms vergrößert oder sie müssten durch eine Umlenkvorrichtung aneinander vorbeigelenkt werden, was die Masse und damit das Massenträgheitsmoment des Roboterarms vergrößert.

Besonders bevorzugt ist es, wenn jeder Arbeitsmotor einen in Motorwellenlängsrichtung an das Antriebs-Längsende seiner Motorwelle anschließenden Motorkörper aufweist, wobei die Motorkörper der beiden Arbeitsmotoren in Motorwellenlängsrichtung in einem gemeinsamen in Motorwellenlängsrichtung verlaufenden Erstreckungsbereich des zweiten Roboterarms zwischen den beiden Antriebs-Längsenden gelegen sind. Dann kann an jedem Antriebsende eine Kraftübertragungseinrichtung zur Kraftübertragung von einem Antriebs-Längsende eines Arbeitsmotors zu einem Antrieb an der Robotspindel angeordnet werden, ohne dass ein Arbeitsmotor in Motorwellenlängsrichtung über den jeweils anderen Arbeitsmotor hinausreicht. Dadurch wird eine Zunahme der Bauhöhe des zweiten Roboterarms gänzlich vermieden.

Weisen die beiden Antriebsmotoren Motorkörper unterschiedlicher Länge auf, so ist es für eine kompakte Bauweise vorteilhaft, den kürzeren derart anzuordnen, dass sein Motorkörper nicht in Motorwellenlängsrichtung über den längeren Motorkörper hinausragt.

Für die Arbeitsmotoren gilt bezüglich der Wärmeabfuhr durch das Gehäuse des zweiten Roboterarms das oben allgemein in Bezug auf die Schwenkmotoren Gesagte. Es ist daher für eine effektive Kühlung des Arbeitsmotors und des zweiten Roboterarms insgesamt bevorzugt, wenn ein Abschnitt eines Gehäuses des zweiten Roboterarms (Arbeitsmotorgehäuseabschnitt) ein Gehäuse für wenigstens einen der Arbeitsmotoren bildet.

Dies kann konstruktiv, wie oben beschrieben dadurch realisiert sein, dass ein Stator wenigstens eines Arbeitsmotors unmittelbar an dem Arbeitsmotorgehäuseabschnitt des zweiten Roboterarms angebracht ist, vorzugsweise durch Aufschrumpfen des Arbeitsmotorgehäuseabschnitts auf den Arbeitsmotor-Stator.

Entsprechend einer bevorzugten Ausführungsform des erfindungsgemäßen Scara-Roboters ist der erste Roboterarm ein passiver Roboterarm, d.h. er umfasst keine Antriebe, während der zweite Roboterarm als aktiver Roboterarm ausgebildet ist. Dementsprechend ist bei dieser Ausführungsform der wenigstens eine Schwenkmotor zum Verschwenken der Arm-Einheit aus erstem und zweitem Roboterarm bezüglich der Roboterkonsole in der Roboterkonsole aufgenommen. Weiterhin ist der wenigstens eine Schwenkmotor zum Verschwenken des zweiten Roboterarms bezüglich des ersten Roboterarms in dem zweiten Roboterarm aufgenommen. Dadurch kann der erste Roboterarm sehr einfach gestaltet sein.

Weiterhin ist bei der bevorzugten Ausführungsform für jedes mit Motoren versehene Roboterkörperteil eine eigene Steuerschaltung vorgesehen, welche in dem jeweiligen Roboterkörperteil aufgenommen ist. Dadurch kann ein Verdrahtungs- und Verkabelungsaufwand zur Herstellung der Betriebsbereitschaft des Roboters verringert werden.

Ferner kann zur Erhöhung der Betriebssicherheit wenigstens ein Teil der Schwenk- und Arbeitsmotoren mit einer mechanischen Bremse versehen sein. Durch derartige Bremsen können Motoren in einem unbestromten Zustand mechanisch stillgesetzt werden. Damit lassen sich mit derartigen mechanischen Bremsen Sicherheitsaspekte realisieren, wie beispielsweise die Verhinderung einer Veränderung der Orientierung von Roboterkörperteilen zueinander bei ausgeschalteten Schwenkmotoren.

Schließlich ist bei dem erfindungsgemäßen kompakten Scara-Roboter gemäß der bevorzugten Ausführungsform ein Gleichrichter der Leistungselektronik in der Roboterkonsole aufgenommen. Dieser Gleichrichter erzeugt aus einer Netzspannung eine Gleichspannung, welche am Roboter, insbesondere an den Umrichterschaltungen, benötigt wird. Dies führt dazu, dass sich außerhalb des Roboters nur noch Elektronik befindet, in welcher keine nennenswerte elektrische Leistung umgesetzt wird. Dadurch ist der Kühlaufwand für die außerhalb des erfindungsgemäßen Scara-Roboters verbleibende Elektronik gering, was eine erhebliche Größenreduzierung der außerhalb des Roboters erforderlichen Schaltschränke ermöglicht. Durch Aufnahme des Gleichrichters in die Roboterkonsole, also in einem unbewegten Roboterkörperteil, wird die bewegte Masse des Roboters bei gleichzeitig kompaktem Aufbau nicht vergrößert.

Die im Scara-Roboter eingesetzten Motoren sind Elektromotoren. Vorzugsweise werden wechselstrombetriebene Motoren verwendet, weshalb es sich bei den oben erwähnten Umrichtern um Wechselrichter handelt. Dies soll jedoch nicht ausschließen, dass auch Gleichstrommotoren und entsprechend Gleichrichter verwendet werden.

Im Folgenden wird die vorliegende Erfindung anhand der beiliegenden Figuren näher beschrieben werden. Es stellt dar:
- Fig.1 1: eine perspektivische Außenansicht eines erfindungsgemäßen Scara-Roboters,
- Fig. 2: eine perspektivische Ansicht des zweiten Roboterarms des Scara-Roboters von Fig. 1 bei entferntem Gehäuse des Roboterarms,
- Fig. 3: eine Draufsicht des zweiten Roboterarms von Fig. 2 bei entferntem Deckel des Roboterarms,
- Fig. 4: eine weitere perspektivische Ansicht des zweiten Roboterarms mit entferntem Gehäuse sowie
- Fig. 5: ein schematischer Schaltplan zur Darstellung der Verkabelung der Antriebe des erfindungsgemäßen Scara-Roboters.

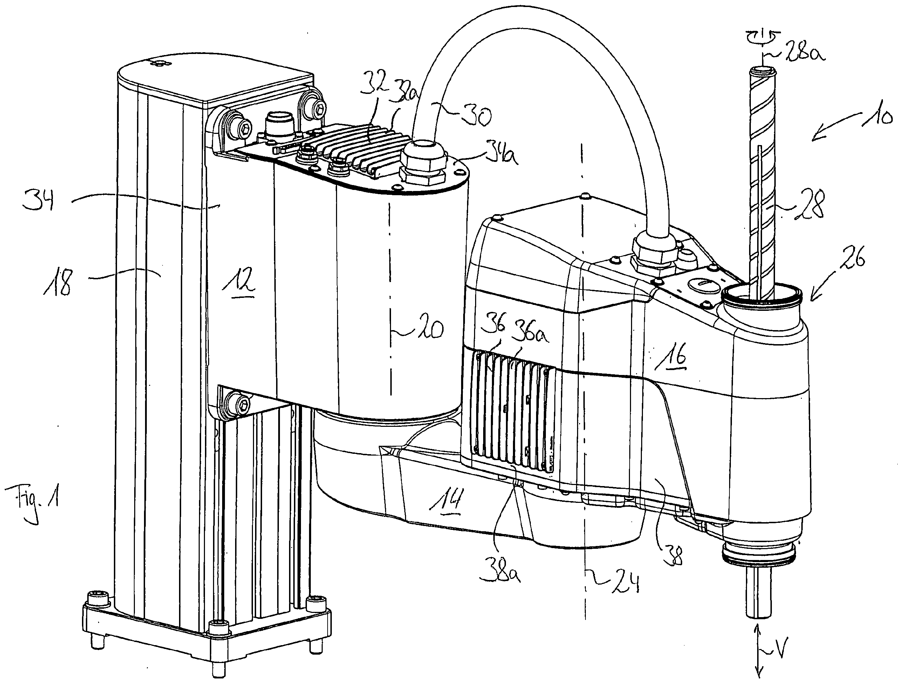

In Fig. 1 ist ein erfindungsgemäßer Scara-Roboter allgemein mit 10 bezeichnet. Der Scara-Roboter 10 umfasst als Roboterkörperteile eine Roboterkonsole 12, einen ersten, passiven Roboterarm 14 und einen zweiten, aktiven Roboterarm 16.

Die Roboterkonsole 12 ist an einen Träger 18 montiert und ortsfest an diesem gehalten. Der Träger 18 kann auf einem Fundament oder auch auf einem bewegbaren Fahrzeug festgelegt sein. Der erste Roboterarm 14 ist an der Roboterkonsole 12 um eine erste Schwenkachse 20 schwenkbar an dessen Unterseite befestigt. Weiterhin ist der zweite Roboterarm 16 am ersten Roboterarm 14 um eine zweite Schwenkachse 24 schwenkbar an diesem befestigt. Die Schwenkachsen 20 und 24 sind im Wesentlichen parallel zueinander.

An seinem schwenkachsenfernen Längsende weist der zweite Roboterarm 16 eine Arbeitseinheit 26 auf. Diese Arbeitseinheit 26 umfasst eine Robotspindel 28, welche in ihrer Längsrichtung wiederum im Wesentlichen parallel zu den Schwenkachsen 20 und 24 angeordnet ist. Die Robotspindel 28 ist in ihrer Längsrichtung, d.h. in Richtung des Doppelpfeils V verlagerbar und unabhängig davon um ihre Längsachse 28a drehbar.

Der erste Roboterarm 14 ist ein passiver Roboterarm, da er keinerlei Motoren enthält. Ein Schwenkmotor zur Schwenkbewegung der Baugruppe aus dem ersten und dem zweiten Roboterarm 14 und 16 bezüglich der Roboterkonsole 12 ist in der Roboterkonsole 12 aufgenommen. Der Schwenkmotor zum Verschwenken des zweiten Roboterarms 16 bezüglich des ersten Roboterarms 14 ist in dem zweiten Roboterarm 16 aufgenommen. Ein Verbindungskabel 30 verbindet die Roboterkonsole 12 und den zweiten Roboterarm 16 zur Übertragung von Energie (Strom) und Information zwischen den beiden Roboterkörperteilen.

Von außen ist an der Roboterkonsole 12 an dessen Oberseite ein Kühlkörper 32 zu erkennen, welcher Rippen 32a aufweist. Der Kühlkörper 32 bildet einen Teil der Wand 34a des Gehäuses 34 der Roboterkonsole 12. Hierzu ist der Kühlkörper 32 in eine Ausschnittsöffnung der Wand 34a eingesetzt. Der Kühlkörper 32 ist mit einem Umrichter, genauer einem Wechselrichter, verbunden, zu dessen Kühlung er dient. Dieser Wechselrichter ist in Fig. 1 nicht zu erkennen.

Ebenso ist ein Kühlkörper 36 mit Rippen 36a in einen Ausschnitt eines Wandabschnitts 38a des Gehäuses 38 des zweiten Roboterarms eingesetzt, sodass der Kühlkörper 36 einen Teil der Gehäusewand des Gehäuses 38 bildet. Auch diesem Kühlkörper 36 ist ein Umrichter, genauer ein Wechselrichter, zugeordnet, welcher in Fig. 1 nicht zu erkennen ist.

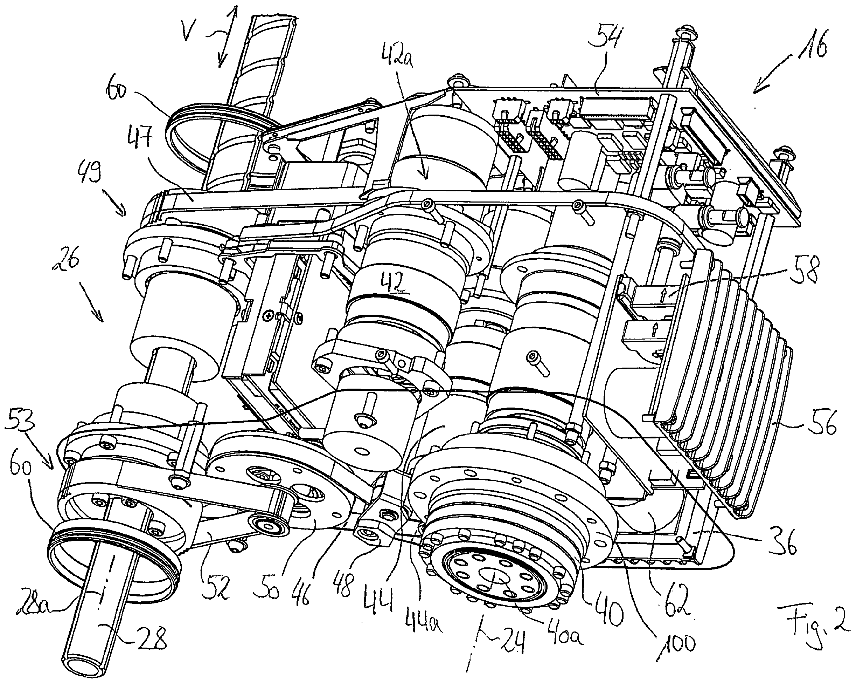

Fig. 2 zeigt eine perspektivische Ansicht des zweiten Roboterarms 16 von einer Betrachtungsposition von unter sowie schräg hinter dem zweiten Roboterarm 16, wobei das Gehäuse 38 zur besseren Erkennung des Innenlebens des zweiten Roboterarms 16 weggelassen ist.

Zu erkennen in Fig. 2 ist der Schwenkmotor 40, dessen Motorwelle 40 längs der zweiten Schwenkachse 24 angeordnet ist. Weiterhin zeigt Fig. 2 einen ersten Arbeitsmotor 42 und einen zweiten Arbeitsmotor 44. Die Arbeitsmotoren 42 und 44 sind im Wesentlichen parallel und nebeneinander, jedoch um 180° verdreht, in dem zweiten Roboterarm 16 aufgenommen. Dies bedeutet, das Arbeits-Längsende 42 des ersten Arbeitsmotors 42, von welchem Antriebskraft zum Heben und Senken der Spindel abgegriffen werden kann, ist nahe dem oberen Ende des zweiten Roboterarms 16 angeordnet, während das Antriebs-Längsende 44a des zweiten Arbeitsmotors 44 nahe dem unteren Ende des zweiten Roboterarms 16 angeordnet ist. Von dem Antriebs-Längsende 44a des zweiten Arbeitsmotors 44 ist ein Zahnriemen 46 über einen Riemenspanner 48 zu einem Untersetzungsrad 50 geführt, welches die Geschwindigkeit des Zahnriemens 46 untersetzt. Von dem Untersetzungsrad 50 ist ein weiterer Zahnriemen 52 zu einer Antriebseinheit 53 geführt, über welche die Robotspindel 28 um ihre Längsachse 28a zur Drehung antreibbar ist. Durch diese Motoranordnung kann man auf Riemen-Umlenkanordnungen verzichten und so die Masse auf das Massenträgheitsmoment des Roboterarms verringern.

An dem oberen Ende des zweiten Roboterarms 16 ist eine Steuerschaltung 54 angeordnet, welche den Betrieb der Motoren 40, 42 und 44 steuert. An dem von der Arbeitseinheit 26 fernen Ende des zweiten Roboterarms ist ein weiterer Kühlkörper 56 vorgesehen. An dem Kühlkörper 56, der im Aufbau zu den Kühlkörpern 32 und 36 identisch ist, ist ein Umrichter, genauer ein Wechselrichter, 58 befestigt. Auch der Kühlkörper 56 ist in eine Ausschnittsöffnung an der Wand 38a des Gehäuses 38 des zweiten Roboterarms 16 eingesetzt.

Vom Antriebs-Längsende 42a ausgehend ist ein Zahnriemen 47 um einen Hub- und Senkantrieb 49 der Robotspindel 28 geführt, durch welchen die Robotspindel 28 in Richtung des Doppelpfeils V heb- und senkbar ist.

Die in Fig. 2 auf Grund der Weglassung des Gehäuses 38 des zweiten Roboterarms 16 scheinbar schwebend gezeichneten Ringe 60 dienen der Befestigung von Dichtungsmitteln zur Abdichtung des Durchgangs der Robotspindel 28 durch das Gehäuse 38.

Darüber hinaus ist in Fig. 2 ein Teil des Umrichters 62 zu erkennen, welcher mit dem in Fig. 1 dargestellten Kühlkörper 36 in Verbindung ist.

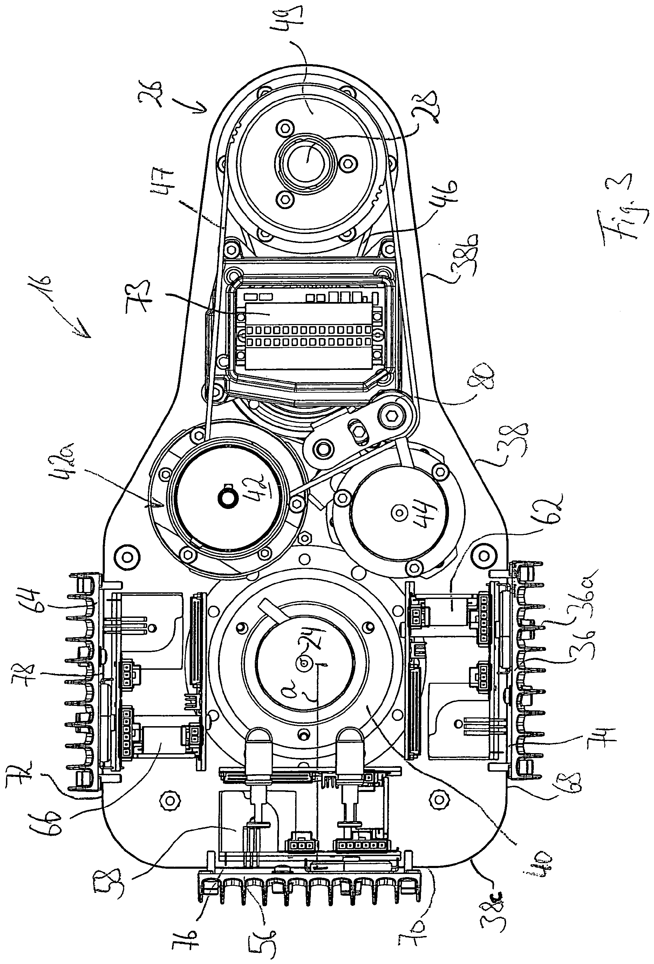

Fig. 3 zeigt eine Draufsicht des zweiten Roboterarms 16, wobei der Deckel entfernt ist, sodass das Innenleben des Roboterarms 16 zu erkennen ist.

Aus Fig. 3 geht hervor, dass ein dritter Kühlkörper 64 in dem Gehäuse 38 in einer Ausschnittsöffnung desselben aufgenommen ist, sodass er einen Teil der Gehäusewandung bildet. Dem Kühlkörper 64 ist ein dritter Umrichter 66 zugeordnet. So kann beispielsweise der Umrichter 62 dem Arbeitsmotor 44, der Umrichter 58, dem Schwenkmotor 40 und der Umrichter 66 dem Arbeitsmotor 42 zugeordnet sein. Alle Umrichter und Motoren werden von der in Fig. 2 gezeigten Steuerschaltung 54 gesteuert. Die Versorgung des zweiten Roboterarms 16 mit Strom und Information von einer übergeordneten Baugruppe erfolgt über die Roboterkonsole 20 mittels des Verbindungskabels 30, das in Fig. 1 zu sehen ist.

In Fig. 3 ist weiter zu erkennen, dass das Gehäuse 38 einen der Schwenkachse 24 nahen Gehäuseabschnitt 38c und einen der Schwenkachse 24 fernen Gehäuseabschnitt 38b aufweist. In dem schwenkachsenfernen Gehäuseabschnitt 38b ist die Arbeitseinheit 26 angeordnet, in dem schwenkachsennahen Gehäuseabschnitt 38c sind dagegen der Schwenkmotor 40 sowie die Umrichter 58, 62 und 64 mit den zugeordneten Kühlkörpern 36, 56 und 64 angeordnet.

Genauer weist der schwenkachsennahe Gehäuseabschnitt 38c drei ebene Gehäuseabschnitte 68, 70 und 72 auf, welche zur Schwenkachse 24 parallel angeordnet sind und zu dieser Schwenkachse einen kürzesten Abstand aufweisen. Beispielhaft ist der Abstand a von der Schwenkachse 24 zum Gehäuseabschnitt 70 eingezeichnet. Die Anordnung der Umrichter 58, 62 und 66 mit den zugeordneten Kühlkörpern 36, 56 und 64 an den schwenkachsennächsten Gehäuseabschnitten 68, 70 und 72 hat den Vorteil, dass der zweite Roboterarm 16 ein möglichst geringes Massenträgheitsmoment bezüglich einer Drehung um die Schwenkachse 24 aufweist. Die ebene Ausbildung der Gehäuseabschnitte 68, 70 und 72 erleichtert darüber hinaus die Anbringung der Umrichter und Kühlkörper. Zusätzlich sind auch die Antriebsmotoren 42 und 44 möglichst nah an dem Schwenkmotor 40 angeordnet.

Weiterhin ist anzumerken, dass zwischen den Antriebsmotoren 42 und 44 und der Robotspindel 28 eine Speichereinheit 73 vorgesehen ist, in welcher roboterspezifische Merkmale, wie etwa Typ, Armabmessungen, Kalibrierdaten, usw. gespeichert sind, sodass eine Universalsteuerung in einem nicht dargestellten Schaltschrank den Scara-Roboter erkennt und sie im Reparaturfall ohne Neukalibrierung des Scara-Roboters getauscht werden kann.

Weiterhin ist an diese Speichereinheit 73 ein Arbeitsgerät anschließbar, welches der Anwender an einem dafür vorgesehenen Längsende der Robotspindel 28 anbringt. Zur Verbindung der Speichereinheit 73 mit einem solchen Arbeitsgerät sind eine Mehrzahl von digitalen und analogen Ein- und Ausgängen vorgesehen. Optional kann auch ein Feldbus-Anschluss vorgesehen sein.

In Fig. 3 ist weiter zu erkennen, dass die Kühlkörper 36, 56 und 64 Ausschnittsöffnungen 74, 76 und 78 des Gehäuses 38 abdecken und somit selbst einen Teil des Gehäuses 38 bilden. Lediglich zur Ergänzung sei noch der Spanner 80 des Zahnriemens 47 erwähnt.

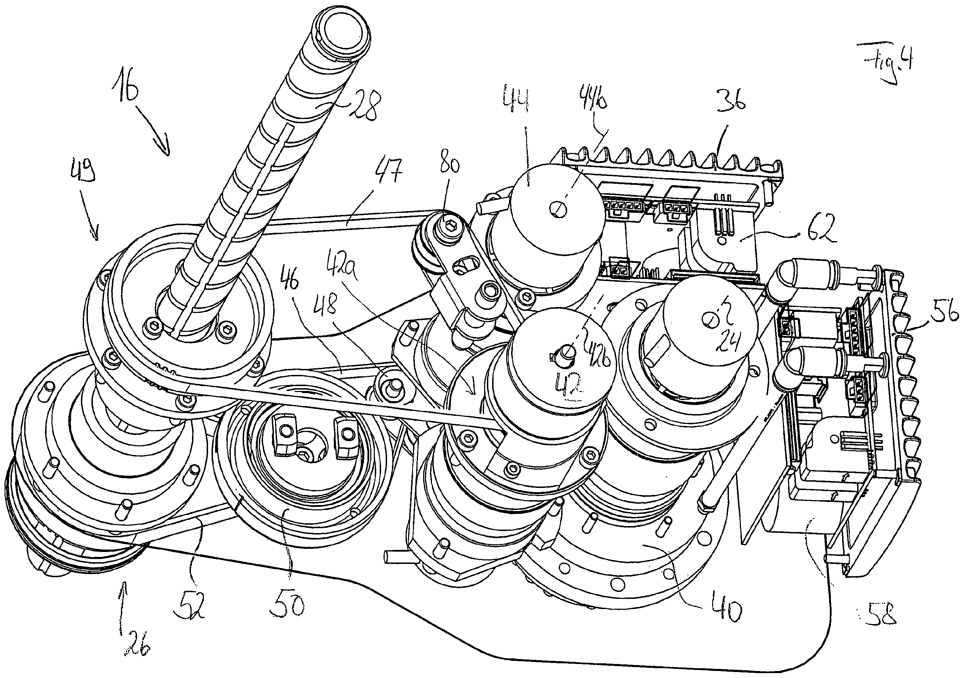

Fig. 4, welche eine Ansicht des zweiten Roboterarms 16 ohne Gehäuse 38 von schräg oben ist, zeigt, dass die Arbeitsmotoren 42 und 44 im Wesentlichen genau nebeneinander liegen, d.h. in Erstreckungsrichtung ihrer parallelen Motorwellen 42b und 44b im Wesentlichen den gleichen Baubereich des zweiten Roboterarms 16 einnehmen. Dadurch steht keiner der Arbeitsmotoren 42 und 44 gegenüber dem jeweils anderen in Längsrichtung der Motorwellen 42b, 44b über, was zu einer geringen Bauhöhe des zweiten Roboterarms 16 in der Längsrichtung der Motoren führt. Außerdem stören die Riementriebe einander nicht, sodass verglichen mit herkömmlichen Anordnungen Riemen-Umlenkvorrichtungen weggelassen werden können. Dadurch wird die Masse und das Massenträgheitsmoment des Roboterarms verringert.

Es sei ergänzend darauf hingewiesen, dass die Achsen aller drehenden Teile in dem zweiten Roboterarm 16, d.h. die Wellen der Motoren 40, 42 und 44, die Untersetzungsscheibe 50, die Robotspindel 28 und sogar die Riemenspanner 48 und 80 sowie die an diesen angebrachten Drehteile im Wesentlichen parallel zueinander ausgerichtet sind.

Der Kühlkörper 64 und der Umrichter 66 sind in Fig. 4 nicht dargestellt.

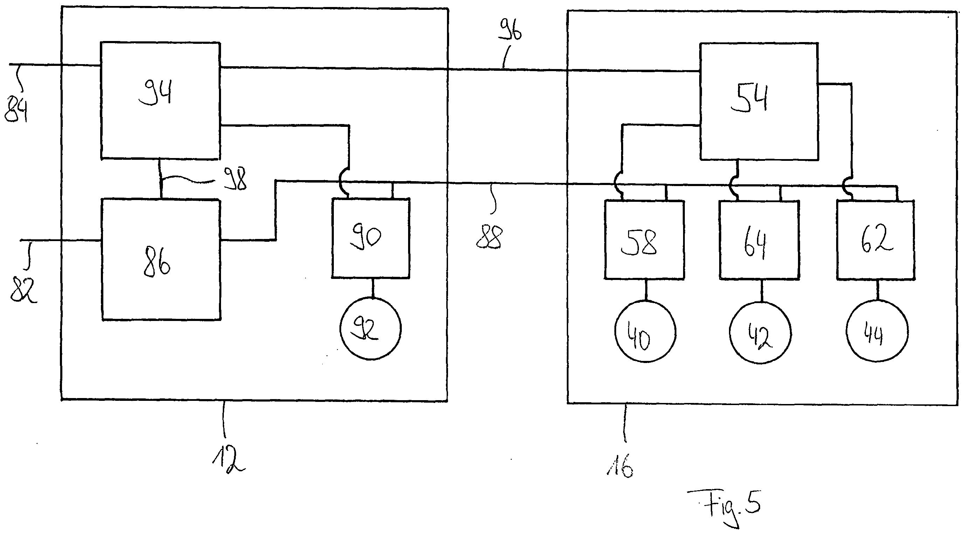

Fig. 5 ist die Schaltung des Scara-Roboters 10 vereinfacht dargestellt. In die Roboterkonsole 12 ist eine Wechselspannungsversorgungsleitung 82 und eine Steuerleitung 84 geführt. Die Wechselspannungsversorgungsleitung 82 führt zu einem Gleichrichter 86, welcher eine Gleichspannung erzeugt, die über eine Gleichspannungsleitung 88 den Wechselrichtern 58, 62 und 64 im zweiten Roboterarm 16 sowie einem Wechselrichter 90 im ersten Roboterarm zugeführt wird. Der Wechselrichter 90 stellt eine Wechselspannung für den ersten Schwenkmotor 92 bereit. Die übrigen Wechselrichter 58, 62 und 64 im zweiten Roboterarm 16 sind mit den Motoren 40, 42 und 44 wie zuvor beschrieben verbunden.

Die Steuerleitung 84 ist mit einer Steuerschaltung 94 für die Roboterkonsole 12 und der Steuerschaltung 54 im zweiten Roboterarm 16 verbunden. Die Steuerschaltungen 94 und 54 sind über eine Steuerverbindungsleitung 96 verbunden, darüber hinaus sind die Steuerschaltungen 94 und 54 jeweils mit den in ihrem zugeordneten Roboterkörperteil aufgenommenen Wechselrichtern verbunden. Überdies ist die Steuerschaltung 94 über eine weitere Steuerungsverbindungsleitung 98 mit dem Gleichrichter 86 zu dessen Steuerung verbunden. Durch Steuerung des Gleichrichters 86 sowie der Wechselrichter 58, 62, 64 und 90 können die Motoren 92, 40, 42 und 44 entsprechend angesteuert werden.

Nachzutragen ist, dass der Schwenkmotor 40 des zweiten Roboterarms 16 an seinem, dem ersten Roboterarm 14 zugewandten Ende mit einem harmonic drive-Getriebe 100 versehen ist.

## Patentansprüche

1. Scara-Roboter, welcher eine Roboterkonsole (12), einen um eine erste Schwenkachse (20) schwenkbar an der Roboterkonsole (12) angelenkten ersten Roboterarm (14) und einen an dem ersten Roboterarm (14) um eine zur ersten Schwenkachse (20) im Wesentlichen parallele zweite Schwenkachse (24) schwenkbar angelenkten zweiten Roboterarm (16) mit wenigstens einer Arbeitseinheit (26) umfasst, wobei der Roboter (10) weiter wenigstens einen ersten Schwenkmotor (92) zum Verschwenken einer Arm-Einheit (14, 16) aus erstem (14) und zweitem (16) Roboterarm bezüglich der Roboterkonsole (12), wenigstens einen zweiten Schwenkmotor (40) zum Verschwenken des zweiten Roboterarms (16) bezüglich des ersten Roboterarms (14) und wenigstens einen Arbeitsmotor (42, 44) zur Betätigung der Arbeitseinheit (26) aufweist, welche Motoren (40, 42, 44, 92) über eine Leistungselektronik (54, 58, 62, 64, 90, 86, 94) steuerbar sind, die als elektrische Schaltungen Umrichterschaltungen (58, 62, 64, 86, 90) zur Stromversorgung der Motoren (40, 42, 44, 90) sowie wenigstens eine Steuerschaltung (54, 94) zum Betrieb der Umrichterschaltungen (58, 62, 64, 86, 90) und damit zur Steuerung der Motoren (58, 62, 64, 86, 90) umfasst,
wobei wenigstens eine Schaltung aus Umrichterschaltung (58, 62, 64, 86, 90) und Steuerschaltung (54, 94) in wenigstens einem der Roboterarme (16) an einem jeweils ihr zugeordneten gesonderten Wandabschnitt (68, 70, 72) eines Gehäuses (38) des Roboterarms (16) angeordnet ist,
**dadurch gekennzeichnet, dass** der Roboterarm (16) bezogen auf eine Schwenkachse (24) des Roboterarms (16) einen schwenkachsennahen (38c) und einen schwenkachsenfernen Gehäuseabschnitt (38b) aufweist und der Gehäusewandabschnitt (68, 70, 72) mit der daran angeordneten wenigstens einen Schaltung (58, 62, 66) in dem schwenkachsennahen Gehäuseabschnitt (38c) gelegen ist.

2. Scara-Roboter nach Anspruch 1,
**dadurch gekennzeichnet, dass** der Gehäusewandabschnitt (68, 70, 72) mit der daran angeordneten wenigstens einen Schaltung (58, 62, 66) der Gehäusewandabschnitt (68, 70, 72) mit dem kürzesten Abstand (a) zur Schwenkachse (24) des Roboterarms (16) ist.

3. Scara-Roboter nach Anspruch 1 oder 2,
**dadurch gekennzeichnet, dass** der wenigstens eine Roboterarm (16) eine Mehrzahl von elektrischen Schaltungen (54, 58, 62, 64, 86, 90, 94) aus Umrichterschaltung (58, 62, 64, 86, 90) und Steuerschaltung (54, 94) umfasst, wobei von diesen Schaltungen (58, 62, 66) jede an einem ihr jeweils zugeordneten gesonderten Wandabschnitt (68, 70, 72) des Gehäuses (83) des Roboterarms (16) angeordnet ist.

4. Scara-Roboter nach Anspruch 2 und 3,
**dadurch gekennzeichnet, dass** die Gehäusewandabschnitte (68, 70, 72) mit daran angeordneten Schaltungen (58, 62, 66) diejenigen Gehäusewandabschnitte (68, 70, 72) mit den kürzesten Abständen (a) zur Schwenkachse (24) des Roboterarms (16) sind.

5. Scara-Roboter nach einem der vorhergehenden Ansprüche,
**dadurch gekennzeichnet, dass** die wenigstens eine Schaltung eine Umrichterschaltung (58, 62, 64, 90) ist.

6. Scara-Roboter nach einem der vorhergehenden Ansprüche,
**dadurch gekennzeichnet, dass** jedem Motor (40, 42, 44, 90) wenigstens eine Umrichterschaltung (58, 62, 64, 86, 90) zugeordnet ist und die zugeordnete Umrichterschaltung (58, 62, 64, 86, 90) in demselben Roboterarm (16) wie der jeweilige Motor (40, 42, 44, 90) aufgenommen ist.

7. Scara-Roboter nach einem der vorhergehenden Ansprüche,
**dadurch gekennzeichnet, dass** wenigstens einem Teil der elektrischen Schaltungen (58, 62, 64, 86, 90) Kühlkörper (32, 36, 56, 64) zugeordnet sind, welche einen Außenwandabschnitt, vorzugsweise auch einen Innenwandabschnitt, eines Gehäuses (34, 38) wenigstens eines Roboterarms (12, 16) bilden.

8. Scara-Roboter nach Anspruch 7,
**dadurch gekennzeichnet, dass** wenigstens der mindestens einen Schaltung, insbesondere einer Umrichterschaltung (58, 62, 64, 86, 90), ein Kühlkörper (32, 36, 56, 64) zugeordnet ist.

9. Scara-Roboter nach einem der vorhergehenden Ansprüche,
**dadurch gekennzeichnet, dass** ein Abschnitt eines Gehäuses eines Roboterarms (Schwenkmotorgehäuseabschnitt) ein Gehäuse für wenigstens einen in dem jeweiligen Roboterarm (16) aufgenommenen Schwenkmotor (40) bildet.

10. Scara-Roboter nach Anspruch 9,
**dadurch gekennzeichnet, dass** ein Stator wenigstens eines Schwenkmotors unmittelbar an dem Schwenkmotorgehäuseabschnitt des Roboterarms angebracht ist, vorzugsweise durch Aufschrumpfen des Schwenkmotorgehäuseabschnitts auf den Schwenkmotor-Stator.

11. Scara-Roboter welcher eine Roboterkonsole (12), einen um eine erste Schwenkachse (20) schwenkbar an der Roboterkonsole (12) angelenkten ersten Roboterarm (14) und einen an dem ersten Roboterarm (14) um eine zur ersten Schwenkachse (20) im Wesentlichen parallele zweite Schwenkachse (24) schwenkbar angelenkten zweiten Roboterarm (16) mit wenigstens einer Arbeitseinheit (26) umfasst, wobei der Roboter (10) weiter wenigstens einen ersten Schwenkmotor (92) zum Verschwenken einer Arm-Einheit (14, 16) aus erstem (14) und zweitem (16) Roboterarm bezüglich der Roboterkonsole (12), wenigstens einen zweiten Schwenkmotor (40) zum Verschwenken des zweiten Roboterarms (16) bezüglich des ersten Roboterarms (14) und wenigstens einen Arbeitsmotor (42, 44) zur Betätigung der Arbeitseinheit (26) aufweist, welche Motoren (40, 42, 44, 92) über eine Leistungselektronik (54, 58, 62, 64, 90, 86, 94) steuerbar sind, die als elektrische Schaltungen Umrichterschaltungen (58, 62, 64, 86, 90) zur Stromversorgung der Motoren (40, 42, 44, 90) sowie wenigstens eine Steuerschaltung (54, 94) zum Betrieb der Umrichterschaltungen (58, 62, 64, 86, 90) und damit zur Steuerung der Motoren (58, 62, 64, 86, 90) umfasst, bei welchem vorzugsweise wenigstens eine Schaltung aus Umrichterschaltung (58, 62, 64, 86, 90) und Steuerschaltung (54, 94) in wenigstens einem der Roboterarme (16) an einem ihr zugeordneten Wandabschnitt (68, 70, 72) eines Gehäuses (38) des Roboterarms (16) angeordnet ist, gegebenenfalls unter Einbeziehung des Kennzeichenteils von Anspruch 1 oder/und wenigstens eines der Ansprüche 2 bis 10, bei welchem ein Roboterarm (16) zwei Arbeitsmotoren (42, 44) für den Bewegungsantrieb der Arbeitseinheit (26) umfasst, von welchen jeder Arbeitsmotor (42, 44) eine Motorwelle (42b, 44b) mit einem Antriebs-Längsende (42a, 44a) aufweist, von dem Antriebskraft abgreifbar ist,
**dadurch gekennzeichnet, dass** die Arbeitsmotoren (42, 44) in dem Roboterarm (16) mit im Wesentlichen parallelen Motorwellen (42b, 44b) jedoch entgegengesetzter Orientierung derart angeordnet sind, dass die Antriebs-Längsenden (42a, 44a) in entgegengesetzte Richtung weisen.

12. Scara-Roboter nach Anspruch 11,
**dadurch gekennzeichnet, dass** der Roboterarm (16) der zweite Roboterarm (16) ist und dieser als Arbeitseinheit (26) eine um eine Drehachse (28a) drehbare und unabhängig davon in Richtung der Drehachse (28a) verlagerbare Robotspindel (28) umfasst, wobei die Arbeitsmotoren (42, 44) einen Bewegungsantrieb für die Robotspindel (28) bilden.

13. Scara-Roboter nach Anspruch 11 oder 12,
**dadurch gekennzeichnet, dass** jeder Arbeitsmotor (42, 44) einen in Motorwellenlängsrichtung an das Antriebs-Längsende (42a, 44a) seiner Motorwelle (42b, 44b) anschließenden Motorkörper aufweist, wobei die Motorkörper der beiden Arbeitsmotoren (42, 44) in Motorwellenlängsrichtung in einem gemeinsamen in Motorwellenlängsrichtung verlaufenden Erstreckungsbereich des zweiten Roboterarms zwischen den beiden Antriebs-Längsenden (42a, 44a) gelegen sind.

14. Scara-Roboter nach einem der Ansprüche 11 bis 13,
**dadurch gekennzeichnet, dass** ein Abschnitt eines Gehäuses des zweiten Roboterarms (12) (Arbeitsmotorgehäuseabschnitt) ein Gehäuse für wenigstens wenigstens einen der Arbeitsmotoren (42, 44) bildet.

15. Scara-Roboter nach Anspruch 14,
**dadurch gekennzeichnet, dass** ein Stator wenigstens eines Arbeitsmotors unmittelbar an dem Arbeitsmotorgehäuseabschnitt des zweiten Roboterarms (16) angebracht ist, vorzugsweise durch Aufschrumpfen des Arbeitsmotorgehäuseabschnitts auf den Arbeitsmotor-Stator.

16. Scara-Roboter nach einem der vorhergehenden Ansprüche,
**dadurch gekennzeichnet, dass** der wenigstens eine Schwenkmotor (92) zum Verschwenken der Arm-Einheit aus dem ersten (14) und dem zweiten Roboterarm (16) bezüglich der Roboterkonsole (12) in der Roboterkonsole (12) aufgenommen ist.

17. Scara-Roboter nach einem der vorhergehenden Ansprüche,
**dadurch gekennzeichnet, dass** der wenigstens eine Schwenkmotor (40) zum Verschwenken des zweiten Roboterarms (16) bezüglich des ersten Roboterarms (14) in dem zweiten Roboterarm (16) aufgenommen ist.

18. Scara-Roboter nach den Ansprüchen 16 und 17,
**dadurch gekennzeichnet, dass** in der Roboterkonsole (12) und in dem zweiten Roboterarm (16) je wenigstens eine Steuerschaltung (54, 94) zur Steuerung der in dem jeweiligen Roboterkörperteil (12, 16) vorgesehenen Motoren (40, 42, 44, 92) aufgenommen ist.

19. Scara-Roboter nach einem der vorhergehenden Ansprüche,
**dadurch gekennzeichnet, dass** wenigstens ein Teil der Schwenk- und Arbeitsmotoren mit einer mechanischen Bremse versehen sind.

20. Scara-Roboter nach einem der vorhergehenden Ansprüche,
**dadurch gekennzeichnet, dass** die Leistungselektronik einen Gleichrichter (86) umfasst, welcher aus einer Netzspannung eine Gleichspannung erzeugt, wobei der Gleichrichter (86) in der Roboterkonsole (12) aufgenommen ist.

## Claims

1. Scara robot comprising a robot console (12), a first robot arm (14) mounted on the robot console (12) that is pivotable about a first pivot axis (20), and a second robot arm (16), with at least a work unit (26), that is pivotable about a second pivot axis (24) essentially parallel to the first pivot axis (20), wherein the robot (10) further comprises at least one first pivot motor (92) for pivoting an arm unit (14, 16) of a first (14) and second (16) robot arm with respect to the robot console (12), at least a second pivot motor (40) for pivoting the second robot arm (16) with respect to the first robot arm (14) and at least one pivot motor (42, 44) to operate the work unit (26), wherein the motors (40, 42, 44, 90) are controllable via power electronics (54, 58, 62, 64, 90, 86, 94) which comprise converter circuits (58, 62, 64, 86, 90) as electrical circuits to supply current to the motors (40,42,44,90), as well as at least one control circuit (54, 94) for operation of the converter circuits (58, 62, 64, 86, 90) and thus for control of the motors (58, 62, 64, 86, 90),
wherein at least one circuit of the converter circuit (58, 62, 64, 86, 90) and control circuits (54, 94) is arranged in at least one of the robot arms (16) at a wall section (68, 70, 72) of a housing (38) of the robot arm (16) specifically assigned to it,
**characterized in that**
relative to a pivot axis (24) of the robot arm (16), the robot arm (16) comprises a housing section (38c) close to the pivot axis and a housing section (38c) remote from the pivot axis, while the housing wall section (68, 70, 72) with the at least one housing section (58, 62, 66) arranged on it, is located in the housing section (38c) close to the pivot axis.

2. Scara robot according to claim 1,
**characterized in that**
the housing wall section (68, 70, 72) with the at least one circuit (58, 62, 66) of the housing wall section (68, 70, 72) arranged thereon, is the one with the shortest distance (a) to the pivot axis (24) of the robot arm (16).

3. Scara robot according to claim 1 or 2,
**characterized in that**
the at least one robot arm (16) comprises a plurality of electrical circuits (54, 58, 62, 64, 86, 90, 94) of the converter circuit (58, 62, 64, 86, 90) and control circuit (54, 94), wherein each one of these circuits (58, 62, 66) is respectively arranged at a wall section (68, 70, 72) of the housing (83) of the robot arm (16) specifically assigned to it.

4. Scara robot according to claim 2 and 3,
**characterized in that**
the housing wall sections (68, 70, 20, 72) with the circuits (58, 62, 66) are those housing wall sections (68, 70, 72) at the shortest distance (a) to the pivot axis (24) of the robot arm (16).

5. Scara robot according to one of the preceding claims,
**characterized in that**
the at least one circuit is a converter circuit (58, 62, 64, 90).

6. Scara robot according to one of the preceding claims,
**characterized in that**
at least one converter circuit (58, 62, 64, 86, 90) is associated with each motor (40, 42, 44, 90), and the associated converter circuit (58, 62, 64, 86, 90) is housed in the same robot arm (16) as the respective motor (40, 42, 44, 90).

7. Scara robot according to one of the preceding claims,
**characterized in that**
at least some of the electrical circuits (58, 62, 64, 86, 90) are associated with heat sinks (32, 36, 56, 64), which form an outer wall section, preferably also an inner wall section, of a housing (34, 38) of at least one robot arm (12, 16).

8. Scara robot according to claim 7,
**characterized in that**
at least the at least one circuit, in particular a converter circuit (58, 62, 64, 86, 90) is associated with a heat sink (32, 36, 56, 64).

9. Scara robot according to one of the preceding claims,
**characterized in that**
a section of a housing of a robot arm (pivot motor housing section) forms a housing for at least one pivot motor (40) housed in the respective robot arm (16).

10. Scara robot according to claim 9,
**characterized in that**
a stator of at least one pivot motor is attached directly to the pivot motor housing section of the robot arm, preferably by shrinking the pivot motor housing section onto the pivot motor stator.

11. Scara robot comprises a robot console (12), a first robot arm (14) mounted on the robot console (12) that is pivotable about a first pivot axis (20), and a second robot arm (16), with at least a work unit (26), that is pivotable about a second pivot axis (24) that is essentially parallel to the first pivot axis (20), wherein the robot (10) further comprises at least one first pivot motor (92) for pivoting an arm unit (14, 16) of a first (14) and second (16) robot arm with respect to the robot console (12), at least a second pivot motor (40) for pivoting the second robot arm (16) with respect to the first robot arm (14) and at least one pivot motor (42, 44) to operate the work unit (26), wherein the motors (40, 42, 44, 90) are controllable via power electronics (54, 58, 62, 64, 90, 86, 94) which comprise converter circuits (58, 62, 64, 86, 90) as electrical circuits to supply current to the motors (40,42,44,90), as well as at least one control circuit (54, 94) for operation of the converter circuits (58, 62, 64, 86, 90) and thus for control of the motors (58, 62, 64, 86, 90), wherein at least one circuit of the converter circuits (58, 62, 64, 86, 90) and control circuits (54, 94) is arranged in at least one of the robot arms (16) at a wall section (68, 70, 72) of a housing (38) of the robot arm (16) specifically assigned to it, optionally by using to the characterizing part of claim 1 or/and at least one of the claims 2 to 10, wherein a robot arm (16) comprises two work motors (42, 44) for the driving force of the work unit (26), wherein each work motor (42, 44) comprises a motor shaft (42b, 44b) with drive longitudinal ends (42a, 44a) from which driving force may be tapped,
**characterized in that**
the work motors (42, 44) in the robot arm (16) are arranged with essentially parallel motor shafts (42b, 44b), however in opposite directions, so that the drive longitudinal ends (42a, 44a) point in opposite directions.

12. Scara robot according to claim 11,
**characterized in that**
the robot arm (16) is the second robot arm (16) and this comprises, as the work unit (26), a robot spindle (28) that is rotatable about an axis of rotation (28a), and is displaceable independently thereof in the direction of the axis of rotation (28a), wherein the work motors (42, 44) form a movement drive for the robot spindle (28).

13. Scara robot according to claim 11 or 12,
**characterized in that**
each work motor (42, 44) has a motor body adjoining the drive longitudinal end (42a, 44a) of its motor shaft (42b, 44b) in the motor shaft longitudinal direction, wherein the motor bodies of the two work motors (42, 44) are located in a common region of the second robot arm extending between the two drive longitudinal ends (42a, 44a) in the longitudinal direction of the motor shaft.

14. Scara robot according to one of the claims 11 to 13,
**characterized in that**
a section of a housing of the second robot arm (12) (work motor housing section) forms a housing for at least one of the work motors (42, 44).

15. Scara robot according to claim 14,
**characterized in that**
a stator of at least one work motor is attached directly to the work motor housing section of the second robot arm (16), preferably by shrinking the work motor housing section onto the work motor stator.

16. Scara robot according to one of the preceding claims,
**characterized in that**
the at least one pivot motor (92) for pivoting the arm unit of the first (14) and the second robot arm (16) with respect to the robot console (12) is housed in the robot console (12).

17. Scara robot according to one of the preceding claims,
**characterized in that**
the at least one pivot motor (40) is housed in the second robot arm (16) for pivoting the second robot arm (16) with respect to the first robot arm (14).

18. Scara robot according to claims 16 and 17,
**characterized in that**
at least one control circuit (54, 94) for controlling the motors (40, 42, 44, 92) provided in the respective robot body part (12, 16) is housed in the robot console (12) and in the second robot arm (16).

19. Scara robot according to one of the preceding claims,
**characterized in that**
at least some of the pivot and work motors are provided with a mechanical brake.

20. Scara robot according to one of the preceding claims,
**characterized in that**
the power electronics comprises a rectifier (86) to generate a DC voltage from a mains voltage, wherein the rectifier (86) is housed in the robot console (12).

## Revendications

1. Robot Scara, qui comprend une console de robot (12), un premier bras de robot (14) articulé sur la console de robot (12) de façon pivotante autour d'un premier axe de pivotement (20), et un deuxième bras de robot (16), avec au moins une unité de travail (26), articulé sur le premier bras de robot (14) de façon pivotante autour d'un deuxième axe ce pivotement (24) essentiellement parallèle au premier axe de pivotement (20), le robot (10) présentant également au moins un premier moteur de pivotement (92) pour le pivotement, par rapport à la console de robot (12), d'une unité de bras (14, 16) composée du premier bras de robot (14) et du deuxième bras de robot (16), au moins un deuxième moteur de pivotement (40) pour le pivotement du deuxième bras de robot (16) par rapport au premier bras de robot (14) et au moins un moteur de travail (42, 44) pour l'actionnement de l'unité de travail (26), lesquels moteurs (40, 42, 44, 92) peuvent être commandés par le biais d'une électronique de puissance (54, 58, 62, 64, 90, 86, 94) qui comprend, en tant que circuits électriques, des circuits convertisseurs (58, 62, 64, 86, 90) pour l'alimentation en courant des moteurs (40, 42, 44, 90) ainsi qu'au moins un circuit de commande (54, 94) pour le fonctionnement des circuits convertisseurs (58, 62, 64, 86, 90) et ainsi pour la commande des moteurs (58, 62, 64, 86, 90),
au moins un circuit parmi le circuit convertisseur (58, 62, 64, 86, 90) et le circuit de commande (54, 94) étant disposé dans au moins un des bras de robot (16) sur un tronçon de paroi (68, 70, 72) séparé d'un carter (38) du bras de robot (16) qui lui est respectivement affecté,
**caractérisé en ce que,** rapporté à un axe ce pivotement (24) du bras de robot (16), le bras de robot (16) présente un tronçon de carter proche de l'axe de pivotement (38c) et un tronçon de carter éloigné de l'axe de pivotement (38b) et le tronçon de paroi de carter (68, 70, 72), avec au moins un circuit (58, 62, 66) monté dessus, est disposé dans le tronçon de carter proche de l'axe de pivotement (38c).

2. Robot Scara selon la revendication 1,
**caractérisé en ce que** le tronçon de paroi de carter (68, 70, 72), avec au moins un circuit (58, 62, 66) monté dessus, est le tronçon de paroi de carter (68, 70, 72) avec la distance (a) la plus courte par rapport à l'axe de pivotement (24) du bras de robot (16).

3. Robot Scara selon la revendication 1 ou 2,
**caractérisé en ce que** au moins un bras de robot (16) comprend une pluralité de circuits électriques (54, 58, 62, 64, 86, 90, 94) composés du circuit convertisseur (58, 62, 64, 86, 90) et du circuit de commande (54, 94) alors que, parmi ces circuits (58, 62, 66), chacun est disposé sur un tronçon de paroi de carter (68, 70, 72), séparé du carter (83) du bras de robot (16), qui lui est respectivement affecté.

4. Robot Scara selon les revendications 2 et 3,
**caractérisé en ce que** les tronçon de paroi de carter (68, 70, 72) avec des circuits (58, 62, 66) qui sont disposés dessus sont les tronçons de paroi de carter (68, 70, 72) avec les distances (a) les plus courtes par rapport à l'axe de pivotement (24) du bras de robot (16).

5. Robot Scara selon l'une des revendications précédentes,
**caractérisé en ce qu**'au moins un circuit est un circuit convertisseur (58, 62, 64, 90).

6. Robot Scara selon l'une des revendications précédentes,
**caractérisé en ce qu**'au moins un circuit convertisseur (58, 62, 64, 86, 90) est affecté à chaque moteur (40, 42, 44, 90) et le circuit convertisseur (58, 62, 64, 86, 90) affecté est reçu dans le même bras de robot (16) que le moteur (40, 42, 44, 90) respectif.

7. Robot Scara selon l'une des revendications précédentes,
**caractérisé en ce que** des corps de refroidissement (32, 36, 56, 64) sont affectés à au moins une partie des circuits électriques (58, 62, 64, 86, 90) et forment un tronçon de paroi externe, de préférence également un tronçon de paroi interne (34, 38), d'au moins un bras de robot (12, 16).

8. Robot Scara selon la revendication 7,
**caractérisé en ce qu**'au moins un corps de refroidissement (32, 36, 56, 64) est affecté au moins un circuit, en particulier à un circuit convertisseur (58, 62, 64, 86, 90).

9. Robot Scara selon l'une des revendications précédentes,
**caractérisé en ce qu**'un tronçon d'un carter d'un bras de robot (tronçon de carter de moteur de pivotement) forme un carter pour au moins un moteur de pivotement (40) reçu dans le bras de robot (16) respectif.

10. Robot Scara selon la revendication 9,
**caractérisé en ce qu**'un stator d'au moins un moteur de pivotement est mis en place directement sur le tronçon de carter de moteur de pivotement du bras de robot, de préférence par frettage du tronçon de carter de moteur de pivotement sur le stator du moteur de pivotement.

11. Robot Scara, lequel comprend une console de robot (12), un premier bras de robot (14) articulé sur la console de robot (12) de façon pivotante autour d'un premier axe de pivotement (20) et un deuxième bras de robot (16), avec au moins une unité de travail (26), articulé sur le premier bras de robot (14) de façon pivotante autour d'un deuxième axe ce pivotement (24) essentiellement parallèle au premier axe de pivotement (20), le robot (10) présentant également au moins un premier moteur de pivotement (92) pour le pivotement d'une unité de bras (14, 16), composée du premier bras de robot (14) et du deuxième bras de robot (16), par rapport à la console de robot (12), au moins un deuxième moteur de pivotement (40) pour le pivotement du deuxième bras de robot (16) par rapport au premier bras de robot (14) et au moins un moteur de travail (42, 44) pour l'actionnement de l'unité de travail (26), lesquels moteurs (40, 42, 44, 92) peuvent être commandés par le biais d'une électronique de puissance (54, 58, 62, 64, 90, 86, 94) qui comprend, en tant que circuits électriques, des circuits convertisseurs (58, 62, 64, 86, 90) pour l'alimentation en courant des moteurs (40, 42, 44, 90) ainsi qu'au moins un circuit de commande (54, 94) pour le fonctionnement des circuits convertisseurs (58, 62, 64, 86, 90) et ainsi pour la commande des moteurs (58, 62, 64, 86, 90), dans lequel de préférence au moins un circuit composé du circuit convertisseur (58, 62, 64, 86, 90) et du circuit de commande (54, 94) est disposé dans au moins un des bras de robot (16) sur un tronçon de paroi (68, 70, 72) d'un carter (38) du bras de robot (16) qui lui est respectivement affecté, éventuellement en intégrant la partie caractérisante de la revendication 1 ou/et au moins une des revendications 2 à 10, dans lequel un bras de robot (16) comprend deux moteurs de travail (42, 44) pour le mécanisme de mouvement de l'unité de travail (26), dont chaque moteur (42, 44) présente un arbre moteur (42b, 44b) avec une extrémité longitudinale d'entraînement (42a, 44a) à partir de laquelle la force d'entraînement peut être prélevée,
**caractérisé en ce que** les moteurs de travail (42, 44) sont disposés dans le bras de robot (16) avec des arbres moteurs (42b, 44b) essentiellement parallèles tout en ayant une orientation opposée, de telle sorte que les extrémités longitudinales d'entraînement (42a, 44a) sont orientées dans des directions opposées.

12. Robot Scara selon la revendication 11,
**caractérisé en ce que** le bras de robot (16) est le deuxième bras de robot (16) et celui-ci comprend en tant qu'unité de travail (26) une broche de robot (28) pouvant tourner autour d'un axe de rotation (28a) et pouvant être déplacée indépendamment de cela dans la direction de l'axe de rotation (28a), les moteurs de travail (42, 44) formant un mécanisme d'entraînement pour la broche de robot (28).

13. Robot Scara selon la revendication 11 ou 12,
**caractérisé en ce que** chaque moteur de travail (42, 44) présente un corps de moteur se raccordant dans la direction longitudinale d'arbre moteur à l'extrémité longitudinale d'entraînement (42a, 44a) de son arbre moteur (42b, 44b), les corps de moteur des deux moteurs de travail (42, 44) étant disposés dans la direction longitudinale d'arbre moteur dans une zone d'étendue commune, s'étendant dans la direction longitudinale d'arbre moteur du deuxième bras de robot, entre les deux extrémités longitudinales d'entraînement (42a, 44a).

14. Robot Scara selon l'une des revendications 11 à 13, **caractérisé en ce qu**'un tronçon d'un carter du deuxième bras de robot (12) (tronçon de carter du moteur de travail) forme un carter pour au moins un des moteurs de travail (42, 44).

15. Robot Scara selon la revendication 14,
**caractérisé en ce qu**'un stator d'au moins un moteur de travail est mis en place directement sur le tronçon de carter du moteur de travail du deuxième bras de robot (16), de préférence par frettage du tronçon de carter du moteur de travail sur le stator du moteur de travail.

16. Robot Scara selon l'une des revendications précédentes, **caractérisé en ce qu**'au moins un moteur de pivotement (92) est reçu dans la console de robot (12) pour le pivotement de l'unité de bras composée du premier bras de robot (14) et du deuxième bras de robot (16) par rapport à la console de robot (12).

17. Robot Scara selon l'une des revendications précédentes, **caractérisé en ce qu**'au moins un moteur de pivotement (40) est reçu dans le deuxième bras de robot (16) pour le pivotement du deuxième bras de robot (16) par rapport au premier bras de robot (14).

18. Robot Scara selon les revendications 16 et 17, **caractérisé en ce que** respectivement au moins un circuit de commande (54, 94) est reçu dans la console de robot (12) et dans le deuxième bras de robot (16) pour la commande des moteurs (40, 42, 44, 92) prévus dans la partie de corps de robot (12, 16) respective.

19. Robot Scara selon l'une des revendications précédentes, **caractérisé en ce qu**'au moins une partie des moteurs de pivotement et de travail sont munis d'un frein mécanique.

20. Robot Scara selon l'une des revendications précédentes, **caractérisé en ce que** l'électronique de puissance comprend un redresseur (86) qui produit une tension continue à partir d'une tension du secteur, le redresseur (86) étant reçu dans la console de robot (12).
